**Europäisches Patentamt**

**European Patent Office**

**Office européen des brevets**

(11) Numéro de publication: **0 045 244**
**A1**

## (12) DEMANDE DE BREVET EUROPEEN

(21) Numéro de dépôt: **81401159.9**

(22) Date de dépôt: **21.07.81**

(51) Int. Cl.³: **A 01 C 3/06**

(30) Priorité: **25.07.80 FR 8016433**

(43) Date de publication de la demande: **03.02.82**
**Bulletin 82/5**

(84) Etats contractants désignés: **AT BE CH DE GB IT LI LU NL SE**

(71) Demandeur: **S.A. AUDUREAU Société dite:, La Copechagniere, F-85260 L'Herbergement (Vendée) (FR)**

(72) Inventeur: **Audureau, Bernard, Route de Nantes, F-85620 Rocheserviere (FR)**

(74) Mandataire: **Chevallier, Robert et al, Cabinet BOETTCHER 23, rue La Boétie, F-75008 Paris (FR)**

(54) Dispositif épandeur de fumier ou autre matière en vrac dispersable.

㉗ L'invention concerne un dispositif épandeur de fumier ou autre matière en vrac dispersable. Une benne 3 cylindrique à ouverture supérieure latérale 4 comprend des mobiles 22 à axe fixe 10 disposé dans un quart supérieur latéral du cylindre et un volet 15 incurvé pouvant pivoter en raclant la zone non balayée par les mobiles.

Dispositif épandeur de fumier ou autre matière
en vrac dispersable.

L'invention a pour objet un dispositif épandeur,
pour fumier ou autre matière en vrac, dispersable, constitué par une benne de forme générale cylindrique ouverte sur
un secteur supérieur latéral, et comportant une pluralité
de masses mobiles de projection entraînées en rotation par
un arbre longitudinal fixe intérieur à la benne.

On connaît des dispositifs de ce type, dans
lesquels les masses mobiles de projection, disposées dans
une partie latérale supérieure, sont des masses montées
à l'extrémité de chaînes qui agissent, de façon centrifuge,
par impact sur la masse de fumier, ou autre matière, pour
la projeter transversalement à la benne. Mais un inconvénient connu est qu'il n'est guère possible de remplir
la benne à son niveau nominal en raison de la proximité trop
grande de l'arbre et de la surface de la matière qui provoque des blocages ou des enroulements des chaînes autour
de l'arbre.

On a déjà proposé, par le brevet français
N° 1 390 615, de déplacer horizontalement l'arbre longitudinal portant les masses mobiles de projection. Mais un
tel dispositif est relativement compliqué, car il nécessite
un capot déflecteur mobile déplaçable transversalement à
la benne. Plus récemment, on a proposé, par la demande de
brevet français publiée N° 2 417 929 de résoudre le même
problème par un déplacement vertical. Mais cette solution
ne simplifie pas le mécanisme, qui reste compliqué et encombrant et nécessite même un cache mobile tendant à assurer l'étanchéité de la benne le long d'une saignée pratiquée à chacune de ses extrémités. Il est évident que
cette saignée est indésirable si le produit contient des
composants liquides, tel que du lisier.

Selon d'autres brevets on prévoit de disposer
latéralement un arbre longitudinal s'étendant sur une
partie seulement de la longueur de la benne (brevet suisse
N° 467.001) ou sur la totalité de la longueur de celle-ci (brevets suisse N° 395,617 et américains N° 2,699.948 et 3.603.513),

Le dispositif de l'invention appartient à ce dernier type, à arbre longitudinal intéressant toute la longueur de la benne. La difficulté est de mettre le contenu de la benne en contact avec les bras de projection de l'arbre qui constitue en fait un rotor. Dans les trois derniers brevets cités ci-dessus, il est envisagé de faire basculer plus ou moins fortement la benne pour que son contenu se rapproche du rotor. Cette solution est relativement complexe, exige une énergie assez grande et, en outre, manque de progressivité en ce sens que le contenu de la benne s'accroche par moments puis glisse brusquement à d'autres. L'épandage n'est donc pas vraiment contrôlé.

Le but principal de l'invention est d'éviter ces inconvénients et de proposer un nouveau dispositif étanche, permettant d'utiliser efficacement une benne de grande capacité et exempt de tout mécanisme de translation, d'extension en hauteur ou largeur de la benne et de basculement de celle-ci.

Le but est atteint, selon l'invention, par un dispositif dans lequel l'arbre d'entraînement des masses mobiles est excentré par rapport à l'axe de la benne dans un secteur supérieur ouvert, et il est prévu dans la benne au moins un volet longitudinal se développant entre l'axe général de la benne et sa paroi cylindrique et commandable en pivotement autour de cet axe général.

Par ces moyens, on obtient une bonne projection de la matière, grâce au fait que les masses mobiles de projection sont situées à la partie supérieure de la benne et permettent de remplir la benne à son niveau nominal, pratiquement jusqu'à son axe et de la vider presque complètement grâce au volet longitudinal pivotant.

Selon un mode de réalisation de l'invention, l'axe géométrique de l'arbre d'entraînement des masses mobiles qui constitue avec elles un rotor est disposé à une distance de l'axe général de la benne de l'ordre de la moitié du rayon de cette benne et l'élongation maximale des masses en rotation est de l'ordre de la moitié de ladite distance entre l'axe géométrique de l'arbre du rotor et celui de la benne.

Pratiquement les masses mobiles se déplacent donc dans un cylindre inscrit entre l'axe et les génératrices de la benne dans sa partie latérale supérieure.

Il est avantageux que le volet longitudinal pivotant, se développant entre l'axe général de la benne et sa paroi cylindrique soit de forme générale incurvée avec un rayon de courbure correspondant sensiblement à celui dy cylindre balayé spatialement par le rotor.

Selon une autre caractéristique, le dispositif comprend une cloison déflectrict fixe s'étendant longitudinalement et se développant vers le haut à partir de l'axe général de la benne.

Il est conforme à l'invention que la benne comporte une porte latérale supérieure de remplissage du côté opposé à celui du montage de l'arbre d'entraînement des masses mobiles.

Selon une variante de l'invention, la benne est divisée en deux parties par une cloison transversale dans tout son volume non balayé par le rotor et le volet pivotant est lui-même réalisé en deux parties pivotantes disposées de part et d'autre de la cloison transversale; ces deux parties du volet peuvent être entraînées séparément en pivotement.

D'autres caractéristiques et avantages ressortiront de la description donnée ci-après, uniquement à titre d'exemple, d'un mode de réalisation de l'invention. On se reportera, aux dessins annexés, dans lesquels :

- la figure 1 est une vue horizontale en coupe partielle selon (1-1) de la figure 2 d'un dispositif de l'invention,

- la figure 2 est une vue de bout avec coupe partielle du dispositif de la figure 1 selon II de la figure 1.

- la figure 3 est une vue de bout de sens inverse, selon III de la figure 1.

Un dispositif de l'invention est monté sur un châssis 2 de véhicule 1 et comprend une benne 3 de forme générale cylindrique laissant une ouverture 4 dans un quart environ supérieur latéral 5. La partie cylindrique 6 est fermée aux deux extrémités par des parois 8 à l'avant, 9 à l'arrière. Un arbre 10 traverse de part en part la partie cylindrique en s'appuyant sur deux paliers 7 prévus chacun dans les parois 8 et 9 sensiblement sur un rayon à 45° dirigé vers l'ouverture 4 et à mi-rayon. A l'extrémité avant, l'arbre 10 fait saillie à l'extérieur pour y recevoir un pignon d'entraînement 11 engrenant avec une chaîne sans fin 12 renvoyée sur un autre pignon 13. L'arbre 10 porte une pluralité de chaînes 21 portant chacune une masse 22, qui, lorsque l'arbre 10 tourne, décrit, sous l'effet de la force centrifuge, un cercle C de rayon moitié de celui de la benne et s'inscrivant, entre l'axe général de la benne 3 et l'ouverture 4 du quart latéral supérieur 5. Pendant le fonctionnement cet ensemble constitue un rotor 6.

Une tôle déflectrice 14 fixe, courbée pour diriger les produits vers l'ouverture 4, surmonte en l'enveloppant sur 90° environ, le rotor 6 et s'étend d'une paroi 8 à l'autre paroi 9.

La benne comprend sur son axe général un arbre central 20 sur lequel est monté un volet longitudinal 15 s'étendant radialement avec une incurvation et pouvant se déplacer comme un râcleur dans toute la zone non balayée par le rotor 6 depuis une position de départ 15a où sa courbure est l'inverse de celle du cercle C du cylindre voisin balayé par le rotor 6 jusqu'à une position 15d où son profil épouse celui du cylindre balayé par le rotor 6 en-dessous de celui-ci.

Pour son remplissage la benne comprend, du côté opposé à l'ouverture 4, une autre ouverture supérieure 16 fermée par une porte 17 s'ouvrant sous la position la plus haute 15a pouvant être occupée par le volet incurvé 15. Pour l'entraînement du volet incurvé 15 en pivotement autour de l'arbre central, 20 celui-ci fait saillie à l'arrière de la benne et porte une roue dentée 23 engrenée dans une chaîne sans fin 24 renvoyée par un pignon 25 fixe. La chaîne 24 porte une pièce solidaire 25 pour la tige 26 d'un vérin 27, dont l'autre extrémité est attachée à un point fixe 28. En dimensionnant la roue dentée 23 et l'écartement des roues 23 et 25 de sorte que la course linéaire permise à la pièce 25 corresponde sensiblement à l'angle de rotation permis à la cloison 15 entre ses positions 15a et 15d en passant par les positions intermédiaires 15b et 15c, le volet 15 peut occuper toute position souhaitée.

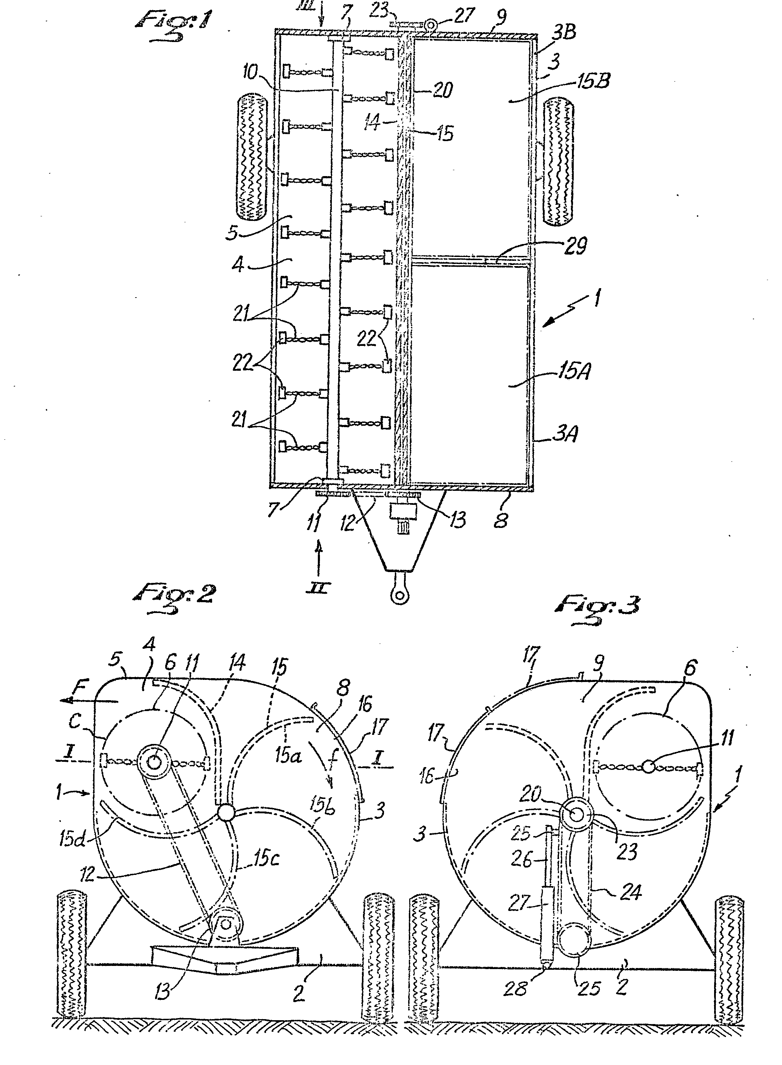

Le mode d'utilisation du dispositif est très simple. On met le volet 15 à sa position supérieure 15a. On ouvre la porte 17 et on remplit la benne sensiblement jusqu'à l'arbre 20 et même un peu au-dessus. On referme la porte. On met le rotor en rotation dans le sens de la projection matérialisé par la flèche F à la figure 2. Au fur-et-à-mesure que le produit est projeté, on fait tourner le volet 15 dans le sens de la flèche f de la figure 2 pour que la partie basse du cylindre balayé par le rotor soit constamment alimentée en matière. Une fois l'appareil complètement vidé, on peut le remplir à nouveau après avoir ramené le volet 15 à sa position 15a. Bien entendu, le volet 15 peut être commandé par l'opérateur ou automatiquement par exemple par démultiplication à partir de l'entraînement du rotor. Dans ce dernier cas les deux mécanismes d'entraînment pouvant être sur la même paroi 8 ou 9 de la benne. Mais le pivotement du volet 15 peut également être asservi à un détecteur de niveau de la matière par rapport au rotor.

De cette façon, le rotor de projection 6 est alimenté régulièrement et d'une manière que l'on peut contrôler ou modifier.

Dans l'exemple de réalisation décrit ci-dessus, le volet 15 qui sert à pousser vers le rotor la matière à répendre s'étend en une seule pièce sur toute la longueur de la benne 3.

Dans certaines circonstances, il est possible d'adopter la variante que l'on décrira maintenant.

0045244

La benne 3 est divisée en dehors de l'espace occupé par le rotor en deux parties au moins, une partie avant 3A et une partie arrière 3B, grâce à une cloison transversale 29 représentée en trait mixte sur la figure 1. De préférence, cette cloison transversale est au milieu de la benne 3 dans le sens de la longueur. Le volet 15 est divisé lui aussi en deux parties, une partie avant 15 A et une partie arrière 15B (dessinées en trait mixte sur la figure 1 bien qu'elles ne devraient pas être visibles sur celle-ci). Chaque partie 15 A, 15 B du volet 15 est située dans la partie correspondante 3 A, 3 B de la benne et montée sur l'arbre 20. Il existe en plus un moyen sélectif de calage en rotation de l'une ou de l'autre partie 15 A, 15 B du volet 15 sur l'arbre 20. Ce moyen peut être, par exemple, une clavette mobile, déplaçable par rapport à l'arbre 20, permettant de faire tourner soit la partie 15 A soit la partie 15 B du volet 15.

Avec la variante, on commence le déchargement de la benne 3 par sa partie arrière 3 B en faisant tourner d'abord,et seulement, la partie arrière 15 B du volet 15. De cette façon, le poids de la charge qui reste encore dans la partie avant 3 A de la benne 3 se reporte davantage sur les roues du tracteur qui tire la benne. Ce transfert de la répartition de la charge est favorable à une meilleure adhérence des roues du tracteur de sorte que cette variante est avantageuse quand le sol est plutôt glissant. On décharge ensuite la partie avant 3 A de la benne.

REVENDICATIONS

1°) Dispositif épandeur, pour fumier ou autre matière en vrac dispersable, constitué par une benne (3) de forme générale cylindrique ouverte sur un secteur supérieur (4) avec un rotor comprenant une pluralité de masses mobiles (22) de projection entraînés en rotation par un arbre longitudinal (10) intérieur à la benne (3), caractérisé en ce que l'arbre d'entraînement (10) des masses mobiles (22) est monté à une position excentrée par rapport à l'axe général de la benne dans le secteur supérieur ouvert et il est prévu dans la benne (3) au moins un volet longitudinal (15) se développant entre l'axe de la benne et sa paroi cylindrique et déplaçable en pivotement autour dudit axe général de la benne (3).

2°) Dispositif selon la revendication 1, caractérisé en ce que l'ouverture (14) et l'arbre (10) d'entraînement des masses mobiles (22) sont prévus dans un secteur latéral supérieur de la benne (3).

3°) Dispositif selon la revendication 1, caractérisé en ce que l'axe géométrique de l'arbre d'entraînement (10) des masses mobiles (22) est disposé à une distance de l'axe général de la benne de l'ordre de la moitié du rayon de cette benne et l'élongation maximale des masses mobiles (22) en rotation est de l'ordre de la moitié de la distance entre l'axe de l'arbre (10) du rotor (6) et celui de la benne.

4°) Dispositif selon la revendication 1, caractérisé en ce que le volet longitudinal (15) mobile en pivotement, se développant entre l'axe général de la benne et sa paroi cylindrique, est de forme générale incurvée avec un rayon de courbure correspondant sensiblement à celui du cylindre balayé spatialement par le rotor (6) et quand il atteint une position extrême de pivotement il épouse le profil de ce rotor (6).

5°) Dispositif selon la revendication 1, caractérisé en ce qu'il comprend une cloison déflectrice (14) fixe s'étendant longitudinalement et se développant vers le haut à partir de l'axe général de la benne.

0045244

6°) Dispositif selon la revendication 2, caractérisé en ce que la benne a une ouverture (16) et une porte (7) du côté opposé à celui du montage de l'arbre du rotor (6),

7°) Dispositif selon la revendication 1 caractérisé en ce que la benne est divisée en dehors de l'espace occupé par le rotor (6) en deux parties par une cloison transversale (29) située de préférence au milieu dans le sens de la longueur de la benne, et le volet (15) est divisé en deux parties occupant chacune respectivement une partie de la benne, ces deux parties (15 A, 15 B) du volet (15) pouvant être calées sélectivement en rotation sur l'arbre (20) d'entraînement en pivotement.

8°) Dispositif selon la revendication 7 caractérisé en ce que les deux parties (15 A, 15 B) du volet (15) sont calées sélectivement en rotation sur l'arbre (20) au moyen d'une clavette déplaçable par rapport à ce dernier.

Fig:1

Fig:2

Fig:3

Office européen
des brevets

**RAPPORT DE RECHERCHE EUROPEENNE**

0045244

Numéro de la demande

EP 81 40 1159

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| D | <u>US - A - 2 699 948</u> (NEIGHBOUR)<br>  * Colonne 2, lignes 23-81; colonne 3; colonne 4, figures 1,2,3 *<br><br>  -- | 1,2 | A 01 C 3/06 |
| D | <u>US - A - 3 603 513</u> (HARRIES)<br>  * Colonne 2 et colonne 3, lignes 1-12; figures 1,2,3 *<br><br>  -- | 1,2 | |
| D | <u>CH - A - 395 617</u> (ERNY)<br>  * Page 1, lignes 26-72; page 2, lignes 1-38; figures 1,2 *<br><br>  ---- | 1 | **DOMAINES TECHNIQUES RECHERCHES (Int. Cl.³)**<br><br>A 01 C<br>A 01 D |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 27-10-1981 | VERMANDER |

OEB Form 1503.1 06.78